(19) Europäisches Patentamt / European Patent Office / Office européen des brevets

(11) **EP 4 389 708 A1**

(12) **EUROPEAN PATENT APPLICATION**
published in accordance with Art. 153(4) EPC

(43) Date of publication:
**26.06.2024 Bulletin 2024/26**

(21) Application number: **22867353.9**

(22) Date of filing: **06.09.2022**

(51) International Patent Classification (IPC):
*C01G 25/04* (2006.01)    *C01G 29/00* (2006.01)
*H01B 1/06* (2006.01)    *H01M 10/052* (2010.01)
*H01M 10/0562* (2010.01)

(52) Cooperative Patent Classification (CPC):
**C01G 25/04; C01G 29/00; H01B 1/06;
H01M 10/052; H01M 10/0562;** Y02E 60/10

(86) International application number:
**PCT/JP2022/033461**

(87) International publication number:
**WO 2023/038031 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 JP 2021145618
15.03.2022 JP 2022040461**

(71) Applicants:
• **Sumitomo Chemical Company, Limited
Tokyo 103-6020 (JP)**
• **Kyoto University
Kyoto-shi, Kyoto 606-8501 (JP)**

(72) Inventors:
• **DOI Atsunori
Niihama-shi, Ehime 792-8521 (JP)**
• **KAGEYAMA Hiroshi
Kyoto-shi, Kyoto 606-8501 (JP)**
• **TASSEL Cedric
Kyoto-shi, Kyoto 606-8501 (JP)**

(74) Representative: **Vossius & Partner
Patentanwälte Rechtsanwälte mbB
Siebertstrasse 3
81675 München (DE)**

(54) **LITHIUM-CONTAINING CHLORIDE, METHOD FOR PRODUCING SAME, SOLID ELECTROLYTE AND BATTERY**

(57) A compound containing lithium, a tetravalent metal element M, chlorine and a dopant element X and having a reflection peak in each of 2θ angle ranges of 15° to 17°, 31° to 32.5°, 41° to 42.5°, 48.5° to 50° and 53° to 55° in an X-ray diffraction chart measured using a CuKa ray at 25°C, in which a half width of a reflection peak having a largest peak height in the 15° to 17° range is 0.35° to 3.00°.

*Fig.1*

EP 4 389 708 A1

## Description

### Technical Field

The present invention relates to a lithium-containing chloride, a method for producing the same, a solid electrolyte and a battery.

### Background Art

In recent years, as electrolytes that are used in electrochemical devices such as lithium-ion batteries, solid electrolytes have been drawing attention (Patent Literature 1 to 7 and Non Patent Literature 1 to 3). Compared with conventional electrolytic solutions, solid electrolytes are excellent in terms of high-temperature durability, high-voltage resistance and the like and are thus considered to be useful for improvement in the performances of batteries such as safety, high capacity, rapid charge/discharge and volumetric energy density.

As described in Patent Literature 1 to 8 and Non Patent Literature 1 to 3, as materials that are used as solid electrolytes for lithium-ion batteries, halide-based solid electrolytes such as chlorides containing lithium and a tetravalent metal element such as Zr and compounds obtained by doping a dopant into the above-described chloride are known. The halide-based solid electrolytes have advantages that oxide-based or sulfide-based solid electrolytes do not have such as no necessity of sintering due to their high flexibility and high safety due to no emission of harmful substances such as $H_2S$.

### Citation List

### Patent Literature

[Patent Literature 1] International Publication No. WO 2020/070955
[Patent Literature 2] International Publication No. WO 2020/070956
[Patent Literature 3] International Publication No. WO 2020/070957
[Patent Literature 4] International Publication No. WO 2020/070958
[Patent Literature 5] International Publication No. WO 2020/188913
[Patent Literature 6] International Publication No. WO 2020/188914
[Patent Literature 7] International Publication No. WO 2020/188915
[Patent Literature 8] International Publication No. WO 2021/024876

### Non Patent Literature

[Non Patent Literature 1] H. Kwak et at., "New Cost-Effective Halide Solid Electrolytes for All-Solid-State Batteries: Mechanochemically Prepared Fe3+-Substituted Li2ZrCl6", Wiley, Advanced Energy Material, Vol. 11, issue 12, 18 2003190 2021.
[Non Patent Literature 2] G. J. Kipouros et al., "On the Mechanism of the Production of Zirconium and Hafnium Metals by Fused Salt Electrolysis", IOP Publishing, ECS Proceedings Volumes, Proc. Vol. 1990-17, pp. 626 (1990).
[Non Patent Literature 3] S. N. Flengas et al., "Properties of the solutions of the alkali-chlorozirconate compounds in alkali-chloride melts", Canadian Science Publishing, Canadian Journal of Chemistry, vol. 46, No. 4, pp. 495-502 (1968).

### Summary of Invention

### Technical Problem

However, for the conventional lithium-containing chlorides containing a tetravalent metal element, there is a room for improvement in the ion conductivity (lithium ion conductivity) at high temperatures (for example, 100°C and the like)

The present invention has been made in consideration of the above-described circumstance, and an objective of the present invention is to provide a lithium-containing chloride having an improved ion conductivity at high temperatures. In addition, another objective of the present invention is to provide a method for producing the above-described lithium-containing chloride, and a solid electrolyte and a battery in which such a lithium-containing chloride is used.

**Solution to Problem**

A compound of the present invention contains lithium, a tetravalent metal element M, chlorine and a dopant element X and has a reflection peak in each of $2\theta$ angle ranges of 15° to 17°, 31° to 32.5°, 41° to 42.5°, 48.5° to 50° and 53° to 55° in an X-ray diffraction chart measured using a CuKa ray at 25°C, and a half width of a reflection peak having a largest peak height in the 15° to 17° range is 0.35° to 3.00°.

The compound preferably has a sea-island structure including an island-like crystal phase and a sea-like amorphous phase that surrounds the crystal phase.

The crystal phase preferably has an average circle-equivalent diameter of 10 to 100 nm.

The compound of the present invention is a compound containing lithium, a tetravalent metal element M, chlorine and a dopant element X and may have a sea-island structure including an island-like crystal phase and a sea-like amorphous phase that surrounds the crystal phase.

The compound preferably has an activation energy of 0.43 eV or lower.

The tetravalent metal element M is preferably Zr.

The dopant element X preferably contains a halogen element X1 that is at least one of bromine and iodine.

In the compound, it is preferable that a content of lithium is 15 to 30 mol%, a content of the tetravalent metal element M is 8 to 15 mol%, a content of chlorine is 50 to 70 mol%, and a content of the halogen element X1 is 0.2 to 8 mol%.

The dopant element X preferably contains at least one metal element X2 selected from the group consisting of divalent to tetravalent metal elements.

The compound of the present invention may be represented by a composition formula: $Li_{\alpha}Zr_{\beta}Cl_{6-\gamma}X1_{\gamma}$, $1.6 \leq \alpha \leq 2.5$, $0 < \beta \leq 1.1$, $0 < \gamma < 1$, and the element X1 may be at least one of Br and I.

The compound of the present invention may be represented by a composition formula: $Li_{\alpha}Zr_{\beta}X2_{\epsilon}Cl_{6-\gamma}X1_{\gamma}$ and may satisfy $1.6 \leq \alpha \leq 2.5$, $0 < \beta \leq 1.1$, $0 \leq \gamma < 1$ and $0 \leq \epsilon < 1$, the element X1 may be at least one of Br and I, the element X2 may be at least one metal element selected from the group consisting of divalent to tetravalent metal elements, and at least one of $\gamma$ and $\epsilon$ may be larger than 0.

A solid electrolyte of the present invention contains the above-described compound.

A battery of the present invention contains the above-described compound.

A method for producing a compound of the present invention includes a step of performing ball milling on a raw material to obtain the above-described compound.

**Advantageous Effects of Invention**

According to the present invention, it is possible to provide a lithium-containing chloride having an improved ion conductivity at high temperatures. In addition, according to the present invention, it is possible to provide a method for producing the above-described lithium-containing chloride, and a solid electrolyte and a battery in which such a lithium-containing chloride is used.

**Brief Description of Drawings**

FIG. 1 is a view showing X-ray diffraction charts of lithium-containing chlorides of Examples 1 to 3.
FIG. 2 is a view showing X-ray diffraction charts of lithium-containing chlorides of Examples 4 to 6.
FIG. 3 is a view showing X-ray diffraction charts of lithium-containing chlorides of Comparative Examples 1 to 3.
FIG. 4 is a TEM image of the lithium-containing chloride of Example 1.
FIG. 5 is a TEM image in which a crystal phase of the lithium-containing chloride of Example 1 is enlarged.
FIG. 6 is a view showing the results of a charge/discharge test at 60°C of a lithium-ion battery in which the lithium-containing chloride of Example 1 is used as a solid electrolyte.
FIG. 7 is a view showing the results of a charge/discharge test at 60°C of a lithium-ion battery in which the lithium-containing chloride of Comparative Example 1 is used as a solid electrolyte.
FIG. 8 is a view showing the results of a charge/discharge test at 25°C of the lithium-ion battery in which the lithium-containing chloride of Example 1 is used as a solid electrolyte.
FIG. 9 is a view showing the results of a charge/discharge test at 60°C of the lithium-ion battery in which the lithium-containing chloride of Example 1 is used as a solid electrolyte.
FIG. 10 is a view showing the results of a cycle test of the lithium-ion battery in which the lithium-containing chloride of Example 1 is used as a solid electrolyte.

FIG. 11 is a view showing the results of a cyclic voltammetric test of the lithium-ion battery in which the lithium-containing chloride of Example 1 is used as a solid electrolyte.

**Description of Embodiments**

A compound of the present embodiment (hereinafter, also referred to as the lithium-containing chloride) satisfies at least one of the following conditions (1) to (4).

(1) The compound contains lithium, a tetravalent metal element M, chlorine and a dopant element X and has a reflection peak in each of 2θ angle ranges of 15° to 17°, 31° to 32.5°, 41° to 42.5°, 48.5° to 50° and 53° to 55° in an X-ray diffraction chart measured using a CuKa ray at 25°C, in an X-ray diffraction chart measured using a CuKa ray at 25°C, and the half width of a reflection peak having a largest peak height in the 15° to 17° range is 0.35° to 3.00°.
(2) The compound contains lithium, a tetravalent metal element M, chlorine and a dopant element X and has a sea-island structure including an island-like crystal phase and a sea-like amorphous phase that surrounds the crystal phase.
(3) The compound is represented by a composition formula: $Li_\alpha Zr_\beta Cl_{6-\gamma} X1_\gamma$, $1.6 \le \alpha \le 2.5$, $0 < \beta \le 1.1$, $0 < \gamma < 1$, and the element X1 is at least one of Br and I.
(4) The compound is represented by a composition formula: $Li_\alpha Zr_\beta X2_\varepsilon Cl_{6-\gamma} X1_\gamma$ and satisfies $1.6 \le \alpha \le 2.5$, $0 < \beta \le 1.1$, $0 \le \gamma < 1$ and $0 \le \varepsilon < 1$, the element X1 is at least one of Br and I, the element X2 is at least one metal element selected from the group consisting of divalent to tetravalent metal elements, and at least one of $\gamma$ and $\varepsilon$ is larger than 0.

The compound that satisfies at least one of the conditions (1) to (4) may be an ion-conductive material or an electrolyte material.

Such a compound has a high ion conductivity (lithium ion conductivity) at high temperatures of 60°C to 100°C or the like. In the present specification, the half width means the full width at half maximum (FWHM). In addition, X1 and X2 in the conditions (3) and (4) are as described below and correspond to the above-described dopant element X.

The half width of a reflection peak having a largest peak height at a 2θ angle of 15° to 17° is preferably 0.35° to 2.00° and more preferably 0.35° to 1.00°. The above-described reflection peak of the lithium-containing chloride according to the present embodiment is broad compared with those of conventional lithium-containing chlorides (for example, Comparative Examples 1 and 2). The present inventors found that, when a dopant element X is added to a lithium-containing chloride containing a tetravalent metal element M, and furthermore, the half width of the above-described reflection peak is adjusted to be in a range of 0.35° to 3.00°, the ion conductivity at high temperatures improves. In addition, the lithium-containing chloride of the present embodiment has a high ion conductivity within a wide range of room temperature (for example, 25°C) to a high temperature (for example, 60°C to 100°C).

In addition, the half width of a reflection peak having a largest peak height at 53° to 55° is preferably 1.40° or higher, more preferably 1.50° or higher and still more preferably 1.65° or higher. When the half width of the reflection peak having a largest peak height at 53° to 55° is controlled to be within the above-described suitable half width range, it is possible to realize a higher ion conductivity in a wide temperature range.

The lithium-containing compound may have a trigonal crystal structure or may have a crystal structure belonging to a space group P-3m1. In a case where the crystal structure of the lithium-containing chloride belongs to the space group P-3m1, a reflection peak is observed in each of 2θ angle ranges of 15° to 17°, 31° to 32.5°, 41° to 42.5°, 48.5° to 50° and 53° to 55° in an X-ray diffraction chart measured using a CuKa ray at 25°C. In the case of satisfying the condition (2), the crystal phase may have a trigonal crystal structure or may have a crystal structure belonging to a space group P-3m1.

The activation energy of the lithium-containing chloride of the present embodiment is preferably 0.43 eV or lower. The activation energy can be obtained by performing curve fitting on a graph obtained by measuring the conductivity of the lithium-containing chloride while changing the temperature T based on the following calculation formula (that is, from an Arrhenius plot).

$$\text{Formula: } \sigma T = A\exp(-E_a/k_b T)$$

Here, $\sigma$ represents the ion conductivity (S/cm), T represents the absolute temperature (K), A represents the frequency factor, $E_a$ represents the activation energy, and $k_b$ represents the Boltzmann constant.

The content of lithium in the lithium-containing chloride is preferably 15 to 30 mol% and more preferably 18 to 25 mol% based on all elements that are contained in the lithium-containing chloride. The content of chlorine in the lithium-containing chloride is preferably 50 to 70 mol% and more preferably 56 to 68 mol% based on all of the elements that are contained in the lithium-containing chloride.

Examples of the tetravalent metal element M include Zr, Ti and Hf, and Zr is preferable. The lithium-containing chloride may contain one or a plurality of tetravalent metal elements M. The content of the tetravalent metal element M in the lithium-containing chloride is preferably 8 to 15 mol%, more preferably 8 to 13 mol% and still more preferably 9 to 12 mol% based on all of the elements that are contained in the lithium-containing chloride.

Examples of the dopant element X include (1) a halogen element X1 that is at least one of bromine and iodine and (2) at least one metal element X2 selected from the group consisting of divalent to tetravalent metal elements. In a case where the metal element X2 is a tetravalent metal element in the lithium-containing chloride, the metal element X2 is a different element different from the tetravalent metal element M that is contained in the lithium-containing chloride. The content of the tetravalent metal element that is the metal element X2 in the lithium-containing chloride is smaller than the content of the tetravalent metal element M. The tetravalent metal element that is the metal element X2 may be a metal element that is 5 mol% or less based on all elements that are contained in the lithium-containing chloride. In addition, the tetravalent metal element that is the metal element X2 may be a metal element that is 20 mol% or less or may be a metal element that is 15 mol% or less based on the total amount of the tetravalent metal element that is contained in the lithium-containing chloride.

In a case where the lithium-containing chloride contains a plurality of tetravalent metal elements, one metal element thereof may occupy 50 mol% or more, may occupy 60 mol% or more or may occupy 80 mol% or more of the total amount of the tetravalent metal element.

As the halogen element X1, bromine is preferable. The content of the halogen element X1 in the lithium-containing chloride is preferably 0.2 to 8 mol%, more preferably 3 to 7 mol% and still more preferably 4 to 6 mol% based on all of the elements that are contained in the lithium-containing chloride.

Examples of the trivalent metal element include Bi, Al, Ga, In, Sc, Sm, Sb, La and the like, and Bi or La is preferable. Examples of the divalent metal element include Zn and alkali earth metals, and Zn is preferable. Examples of the alkali earth metals include Mg, Ca, Sr and Ba. The lithium-containing chloride may contain one or a plurality of the metal elements X2. The tetravalent metal element as the metal element X2 may be Sn.

The content of the metal element X2 in the lithium-containing chloride is preferably 0.05 to 3 mol% and more preferably 0.1 to 2 mol% based on all of the elements that are contained in the lithium-containing chloride.

In the condition (3) or (4), the lithium-containing chloride of the present embodiment may be a chloride represented by the following composition formula (3) or (4).

Composition formula (3): $\mathrm{Li}_\alpha \mathrm{Zr}_\beta \mathrm{Cl}_{6-\gamma} \mathrm{X1}_\gamma$

In the composition formula (3), $1.6 \le \alpha \le 2.5$, $0 < \beta \le 1.1$, $0 < \gamma < 1$, and the element X1 is at least one of Br and I).

Composition formula (4): $\mathrm{Li}_\alpha \mathrm{Zr}_\beta \mathrm{X2}_\varepsilon \mathrm{Cl}_{6-\gamma} \mathrm{X1}_\gamma$

In the composition formula (4), $1.6 \le \alpha \le 2.5$, $0 < \beta \le 1.1$, $0 \le \gamma < 1$ and $0 \le \varepsilon < 1$, the element X1 is at least one of Br and I, the element X2 is at least one metal element X2 selected from the group consisting of divalent to tetravalent metal elements, and at least one of $\gamma$ and $\varepsilon$ is larger than 0.).

In the composition formula (3), $2 \le \alpha \le 2.5$ is preferable, and $2.1 \le \alpha \le 2.4$ is more preferable. In the composition formula (3), $0.5 \le \beta \le 1$ is preferable, and $0.8 \le \beta \le 1$ is more preferable. In the composition formula (3), $0.01 \le \gamma \le 0.8$ is preferable, $0.02 \le \gamma \le 0.7$ is more preferable, $0.1 \le \gamma \le 0.6$ is more preferable, and $0.2 \le \gamma \le 0.6$ is still more preferable. In the formula (3), $\alpha$, $\beta$ and $\gamma$ are selected so that the compound represented by the composition formula (3) becomes electrically neutral.

In the composition formula (4), $2 \le \alpha \le 2.5$ is preferable, and $2.1 \le \alpha \le 2.4$ is more preferable. In the composition formula (4), $0.5 \le \beta \le 1$ is preferable, and $0.8 \le \beta \le 1$ is more preferable. In the composition formula (4), $0.01 \le \gamma \le 0.8$ is preferable, $0.02 \le \gamma \le 0.7$ is more preferable, $0.1 \le \gamma \le 0.6$ is more preferable, and $0.2 \le \gamma \le 0.6$ is still more preferable. In the composition formula (4), $0 < \varepsilon < 1$ is acceptable, $0.01 \le \varepsilon < 0.2$ is preferable, $0.02 \le \varepsilon \le 0.15$ is more preferable. In a case where $\varepsilon$ is larger than 0, $\gamma$ may be 0. In the formula (4), $\alpha$, $\beta$, $\gamma$ and $\varepsilon$ are selected so that the compound represented by the composition formula (4) becomes electrically neutral.

In the condition (2), the lithium-containing chloride of the present embodiment may have a sea-island structure including an island-like crystal phase and a sea-like amorphous phase that surrounds the crystal phase. In the case of satisfying the condition (2), the crystal phase may also satisfy the condition (1).

Here, the sea-island structure can be confirmed by observation with a transmission electron microscope (TEM).

As a pretreatment before the observation, it is preferable to perform cross section processing with focused ion beam (FIB) in an inert atmosphere. Particularly, since a sample of the present embodiment is likely to be damaged by heat, it is preferable to perform the cross section processing with FIB while performing cooling with a cryostat.

Conditions for the observation with TEM are not particularly limited, but it is preferable to perform the observation on a dark visual field.

It was found that the lithium-containing chloride has the above-described sea-island structure and thereby realizes a high ion conductivity. The reason therefor is not yet clear, but the present inventors consider that the amorphous phase showing isotropic ion conduction forms a sea structure, then, the crystal phase showing anisotropic ion conduction forms an island structure, and a sea-island structure in which both phases form a favorable interface is formed, whereby a path through which an ion is conducted at a high speed is formed, and consequently, the ion conductivity of the material improves as a whole.

In addition, in the sea-island structure, the circle-equivalent diameter of the island-like crystal phase is preferably 10 nm or more or 100 nm or less, more preferably 15 nm or more and 80 nm or less and still more preferably 20 nm or more and 53 nm or less. Here, the circle-equivalent diameter refers to the diameter in a case where the crystalline region has been substituted with a circle having the same area. Specifically, a circle-equivalent diameter D is calculated by $2 \times (A/\pi)^{0.5}$ wherein the area of the crystalline region is represented by A. The area A of the crystalline region is calculated by image analysis. Regarding all crystal phases that can be recognized within a visual field (with size of, for example, $1.862 \mu m \times 1.862 \mu m$), the average of the circle-equivalent diameters is obtained by image analysis and can be regarded as the average circle-equivalent diameter.

It is considered that, when the circle-equivalent diameter of the island-like crystal phase is present in a range of the above-described size, an ion conduction path that realizes a high ion conductivity is formed.

As a method for fabricating the above-described sea-island structure, the sea-island structure can be fabricated by introducing an appropriate amount of a dopant element and then sufficiently promoting a mechanochemical reaction with a ball mill for a long period of time.

The lithium-containing chloride of the present embodiment has a high ion conductivity and can be thus used as a material for solid electrolytes. In addition, the lithium-containing chloride of the present embodiment can also be used as a positive electrode or negative electrode material by being mixed with an active material. That is, it is possible to provide a battery containing the lithium-containing chloride of the present embodiment (lithium-ion battery or the like).

(Lithium-ion battery)

As described above, the lithium-containing chloride of the present embodiment can be used as a material for lithium-ion batteries.

A positive electrode of the lithium-ion battery is not particularly limited and may be a positive electrode containing a positive electrode active material and containing an auxiliary conductive agent, a binder or the like as necessary. In addition, the positive electrode may be a positive electrode containing the lithium-containing chloride of the present embodiment.

The positive electrode may be a positive electrode having a layer containing these materials formed on a current collector. Examples of the positive electrode active material include lithium-containing composite metal oxides containing lithium (Li) and at least one transition metal selected from the group consisting of V, Cr, Mn, Fe, Co, Ni and Cu. Examples of such lithium composite metal oxides include $LiCoO_2$, $LiNiO_2$, $LiMn_2O_4$, $Li_2MnO_3$, $LiNi_xMn_yCo_{1-x-y}O_2$ [0 < x + y < 1], $LiNi_xCo_yAl_{1-x-y}O_2$ [0 < x + y < 1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, $Li_2MnSiO_4$ and the like.

A negative electrode of the lithium-ion battery is not particularly limited and may be a negative electrode containing a negative electrode active material and containing an auxiliary conductive agent, a binder or the like as necessary. Examples thereof include metals such as Li, Si, Sn, Si-Mn, Si-Co, Si-Ni, In and Au, alloys containing these metals, carbon materials such as graphite, substances containing a lithium ion inserted between the layers of the carbon materials and the like.

The material of the current collector is not particularly limited and may be a pure metal such as Cu, Mg, Ti, Fe, Co, Ni, Zn, Al, Ge, In, Au, Pt, Ag or Pd or an alloy thereof.

The battery may have a plurality of layers as solid electrolyte layers. For example, the battery may be configured to have a sulfide solid electrolyte layer in addition to a solid electrolyte layer of the present embodiment. The battery may be configured to have a sulfide solid electrolyte layer between a solid electrolyte of the present embodiment and the negative electrode. The sulfide solid electrolyte is not particularly limited, and examples thereof include $Li_6PS_5Cl$, $Li_2S-PS_5$, $Li_{10}GeP_2S_{12}$, $Li_{9.6}P_3S_{12}$, $Li_{9.54}Si_{1.74}P_{1.44}S_{11.7}Cl_{0.3}$, $Li_3PS_4$ and the like.

A battery in which the solid electrolyte of the present embodiment is used has a high ion conductivity and is also highly electrochemically stable up to a high potential region, and there is thus a tendency that a high discharge capacity can be obtained. Particularly, there is a tendency that the discharge capacity improves in a high current density region (region with a high C rate).

A method for producing a lithium-containing chloride of the present embodiment preferably includes a step of performing ball milling on a raw material to obtain a lithium-containing chloride. The raw material is not particularly limited, but a lithium source may be lithium chloride. A source of the tetravalent metal element M may be a chloride of the metal element M, and specific examples thereof include $ZrCl_4$ and the like. In the case of introducing the halogen element X1 as a raw material for introducing the dopant element X, lithium bromide or lithium iodide is preferable. In the case of introducing the metal element X2 as the raw material for introducing the dopant element X, a chloride salt of the metal element X2 is preferable, and specific examples thereof include $BiCl_3$, $ZnCl_2$, $SnCl_4$, $LaCl_3$ and the like.

Conditions for the ball milling are not particularly limited, but it is possible to perform the ball milling at a rotation speed of 200 to 700 rpm for 10 to 100 hours. The pulverization time is preferably 24 hours to 72 hours and more preferably 36 to 60 hours.

Balls that are used for the ball milling are not particularly limited and can be obtained using zirconia balls. The size of the balls being used is not particularly limited, and 2 mm to 10 mm balls can be used.

When the ball milling is performed for the above-described time, each raw material is sufficiently mixed, and a mechanochemical reaction is promoted, whereby the ion conductivity of a compound to be obtained can be improved.

In addition, in the production method of the present embodiment, it is preferable not to perform annealing on the lithium-containing chloride obtained in the above-described step. The annealing refers to, for example, a step of heating the lithium-containing chloride at 100°C or higher.

[Examples]

[Example 1]

<Preparation of lithium-containing chloride>

· Ball milling

In an argon atmosphere having a dew point of -70°C or lower (hereinafter, referred to as the dry argon atmosphere), 0.2245 g of LiCl, 0.8422 g of $ZrCl_4$ and 0.1536 g of LiBr were weighed and raw materials were prepared.

The raw materials were put into a zirconia pot having a capacity of 50 ml that was for the following planetary ball milling, and 65 g of zirconia balls having a diameter of 4 mm were injected thereinto. The raw materials were treated to mechanochemically react with one another under conditions of 48 hours and 380 rpm, thereby obtaining a compound (lithium-containing chloride) of Example 1. Ball milling was performed in a mode where the operation was paused for one minute as an interval every 10 minutes of rotation and the rotation direction was alternately switched clockwise and counterclockwise. The prepared composition of the lithium-containing chloride is $Li_2ZrCl_{5.5}Br_{0.5}$.

Planetary ball milling device: PM 400 manufactured by Verder Scientific GmbH & Co. KG

<Evaluation of crystal structure>

Regarding the obtained compound of Example 1, the crystal structure was evaluated by powder X-ray diffraction measurement at 25°C. Regarding the measurement conditions of the powder X-ray diffraction measurement, the powder X-ray diffraction measurement was performed under the following conditions.

Measuring instrument: Ultima IV (manufactured by Rigaku Corporation)

X-ray generator: CuKa ray source, voltage: 40 kV, current: 40 mA
X-ray detector: Scintillation counter or semiconductor detector
Measurement range: Diffraction angle $2\theta = 10°$ to $80°$
Scanning speed: 4 °/minute

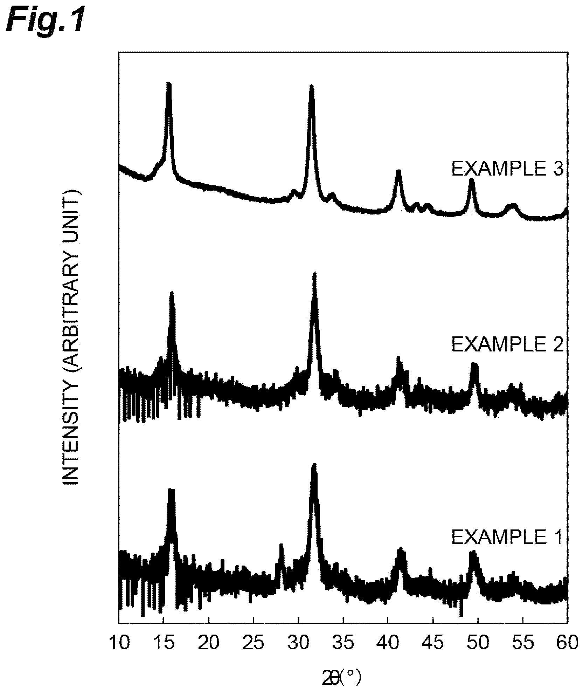

An X-ray diffraction pattern obtained by the measurement is shown in FIG. 1. As shown in FIG. 1, a reflection peak was observed in each of $2\theta$ angle ranges of 15° to 17°, 31° to 32.5°, 41° to 42.5°, 48.5° to 50° and 53° to 55°.

As a result of analysis, the crystal structure belonged to a trigonal space group P-3m1. In addition, as shown in Table 2, the half width of a reflection peak having a largest peak height in a $2\theta$ range of 15.5° to 17° was 0.82°. Similarly, the half width of a reflection peak having a largest peak height in the $2\theta$ range of 53° to 55° was calculated and consequently turned out to be 1.62° as shown in Table 2.

<Evaluation of ion conductivity>

A press forming die including a frame type, a punch lower portion and a punch upper portion was prepared.

The frame type was formed of an insulating polycarbonate. In addition, the punch upper portion and the punch lower portion were both formed of electron-conductive stainless steel and each electrically connected to terminals of an impedance analyzer (SI1260 manufactured by Solatron Analytical).

The ion conductivity of the lithium-containing chloride of Example 1 was measured by the following method using the pressure forming die. First, the powder of the lithium-containing chloride of Example 1 was loaded onto the punch lower portion vertically inserted into a hollow portion of the frame type from below in a dry argon atmosphere. In addition, the punch upper portion was pressed into the hollow portion of the frame type from above, whereby a pressure of 200 MPa was applied to the powder of the lithium-containing chloride of Example 1 in the pressure forming die. After the pressure was applied, the punch was vertically tightened and fixed with a jig, and the impedance of the lithium-containing chloride of Example 1 was measured by an electrochemical impedance measurement method using the impedance analyzer in a state where a constant pressure was held.

A Cole-Cole diagram graph was created from the impedance measurement result. In the Cole-Cole diagram, the actual value of the impedance at a measurement point where the absolute value of the phase of a complex impedance was smallest was regarded as the resistance value with respect to the ion conduction of a halide solid electrolyte material. The ion conductivity was calculated based on the following numerical formula (III) using the resistance value.

$$\sigma = (R_{SE} \times S/t)^{-1} \qquad \cdots \qquad (III)$$

Here,

$\sigma$ is the ion conductivity,
S is the contact area (equal to the cross-sectional area of the hollow portion of the frame type) of the lithium-containing chloride with the punch upper portion,
$R_{SE}$ is the resistance value of the solid electrolyte material in the impedance measurement, and
t is the thickness of the lithium-containing chloride when the pressure is applied.

In addition, the ion conductivity was measured at five temperatures including 25°C and 100°C (25°C, 40°C, 60°C, 80°C and 100°C) in a temperature range from 25°C to 100°C. The results are shown in Table 2. The ion conductivity at each of the five temperatures is represented by $\sigma_T$ (T = 25°C, 40°C, 60°C, 80°C or 100°C). Curve fitting was performed on the five acquired ion conductivity data by the least-squares method based on the Arrhenius equation, and the activation energy ($E_a$) was calculated. The results are shown in Table 2. At each temperature point, after the set temperature was reached in a constant temperature bath, the lithium-containing chloride was held for 90 minutes or longer, and the ion conductivity was then measured. The calculated activation energy is shown in Table 2.

<Fine structure observation with transmission electron microscope>

Fine structure observation was performed under the following measurement conditions.

Device: Analytical electron microscope ARM200F manufactured by JEOL Ltd.
Measurement condition: Accelerating voltage of 200 kV
Sample adjustment: The sample was processed in an inert atmosphere with focused ion beam (FIB) while being cooled with a cryostat

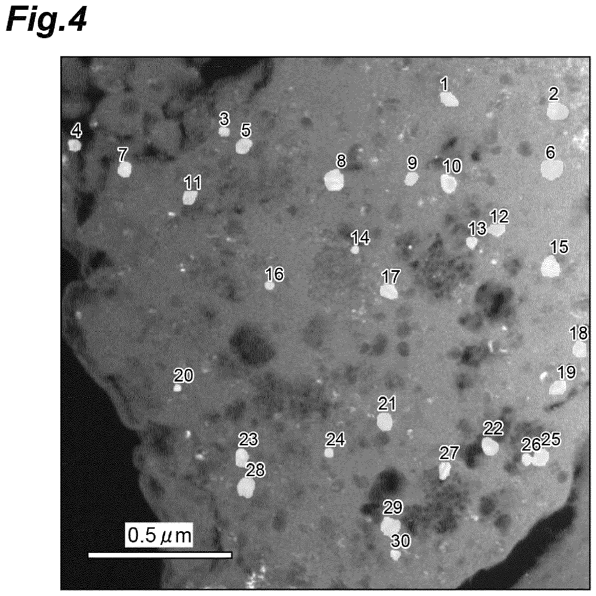

FIG. 4 shows a TEM image of the lithium-containing chloride of Example 1. It was found that, as shown in FIG. 4, a sea-island structure in which island structures were crystal phases and a sea structure of an amorphous phase was formed so as to surround the island structures was formed. Here, in an electron diffraction pattern that is obtained by transmission electron microscopic observation, an image of crystals for which diffraction spots are present in the aperture of a limited visual field is formed, whereby an image of crystals corresponding to specific diffraction spots can be formed brighter than an ambient amorphous phase in the real space. Therefore, the distribution of crystal phases in the real space is found.

In FIG. 4, coloring was performed so that the brightly-formed images of the portions became clear, and each crystal phase was numbered. The spatial distribution of the crystal phases was investigated as described above.

In addition, regarding the crystal phases, as a result of analyzing a total of 66 crystal grains in a 1.862 $\mu$m $\times$ 1.862 $\mu$m visual field, the average circle-equivalent diameter of the crystal phases was 51.5 nm.

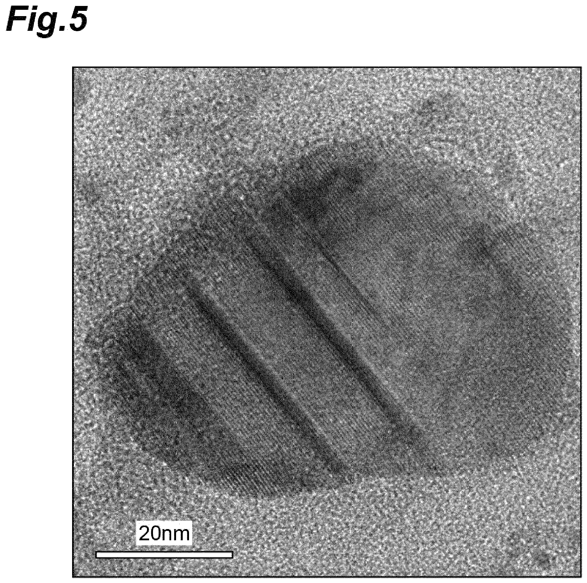

FIG. 5 is an image in which one crystal grain in FIG. 4 is enlarged. As shown in FIG. 5, cross stripes were confirmed, and it was confirmed that they were crystal phases.

<Fabrication of secondary battery>

In a dry argon atmosphere, 29 parts by mass of the lithium-containing chloride of Example 1, 67 parts by mass of $LiNi_{1/3}Mn_{1/3}Co_{1/3}O_2$ and 4 parts by mass of acetylene black were each weighed and mixed together with a mortar, thereby obtaining a mixture.

100 mg of the lithium-containing chloride of Example 1 and 15 mg of the above-described mixture were sequentially laminated in an insulating tube having an inner diameter of 10 mm, thereby obtaining a laminate. A pressure of 200 MPa was applied to the laminate, and a first electrode (a layer of the mixture) and a first solid electrolyte layer (a layer of the lithium-containing chloride) were formed.

Next, 60 mg of a sulfide solid electrolyte $Li_6PS_5Cl$ was put into the tube so as to come into contact with the first solid electrolyte layer, thereby obtaining a laminate. A pressure of 200 MPa was applied to the laminate, and a second solid electrolyte layer was formed. The first solid electrolyte layer was sandwiched by the first electrode and the second solid electrolyte layer.

Next, 60 mg of an In foil was put into the tube so as to come into contact with the second solid electrolyte layer, and 2 mg of a Li foil was put into the tube so as to come into contact with the In foil, thereby obtaining a laminate. A pressure of 200 MPa was applied to the laminate, and a second electrode was formed.

Current collectors formed of stainless steel were attached to the first electrode and the second electrode, and lead wires were then attached to the current collectors. All of the members were disposed and sealed in a desiccator, and a secondary battery of Example 1 was obtained as described above.

<Charge/discharge test>

A charge/discharge test was performed using the following product as a charge/discharge tester.

Charge/discharge tester: TOSCAT-3100 manufactured by Toyo System Co., Ltd.

The charge/discharge test was performed at 60°C and three C rates of 0.1C, 1C and 3C.

The discharge capacity at each C rate is as shown in Table 1.

Charging was performed up to 3.7 V with a constant current at a constant voltage (CCCV charging) at a current density corresponding to each C rate. The current density corresponding to each C rate is shown in Table 1.

Discharging was performed to 1.9 V at the current density corresponding to each C rate.

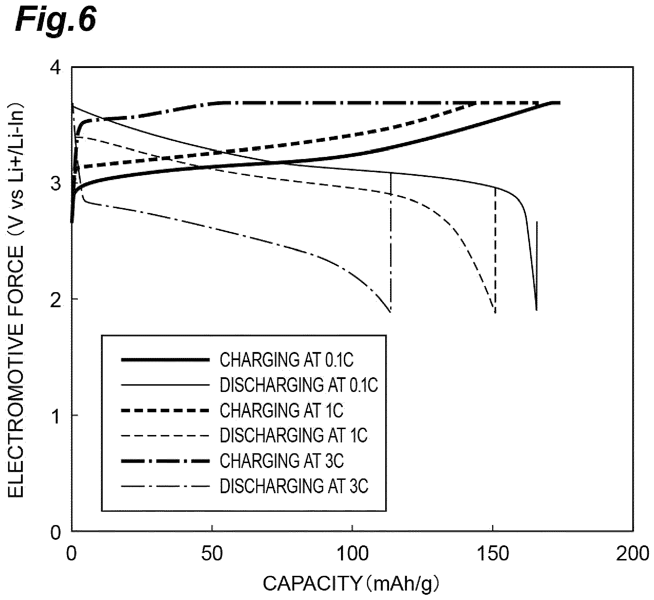

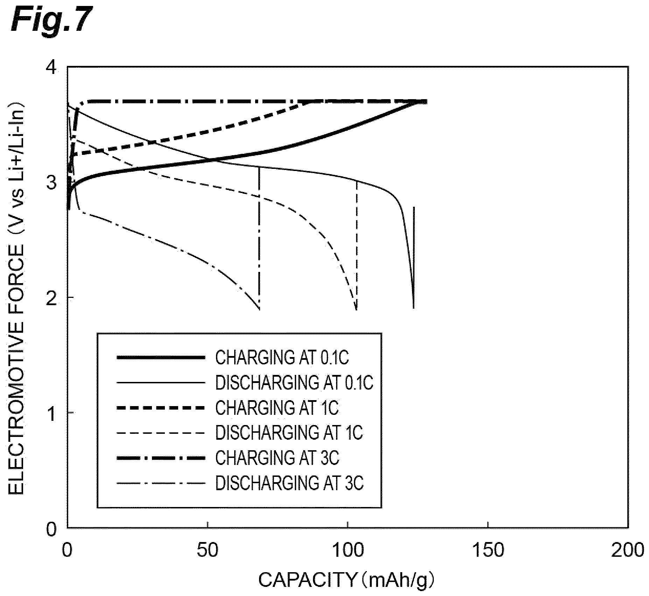

The results (the relationship between the electromotive force (battery voltage) and the capacity) of the charge/discharge tests of Example 1 and Comparative Example 1 are shown in FIG. 6 and FIG. 7, respectively. In addition, the discharge capacities at each C rate in Example 1 and Comparative Example 1 are shown in Table 1.

In Example 1, high discharge capacities were obtained at all of the C rates.

[Table 1]

| · Discharge capacity (unit: mAh/g) | | | |
|---|---|---|---|
| Crate current density) | 0.1C (0.19 mA/cm$^2$) | 1C (1.9 mA/cm$^2$) | 3C (5.8 mA/cm$^2$) |
| Example 1 | 165.4 | 151.0 | 113.8 |
| Comparative Example 1 | 123.9 | 103.9 | 68.2 |

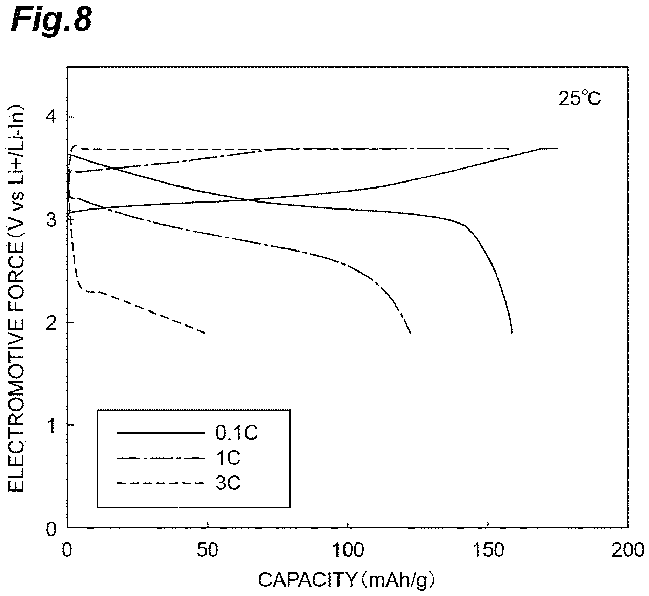

In addition, a charge/discharge test of the secondary battery of Example 1 was performed at 25°C. The results are shown in FIG. 8. The charge/discharge test was performed under the same conditions as those for the charge/discharge test at 60°C except the temperature.

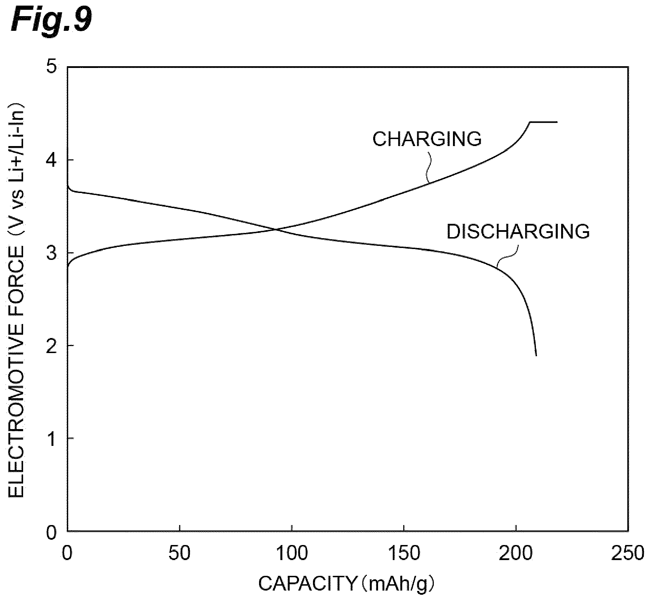

In addition, charging was performed on the secondary battery of Example 1 up to 4.4 V at a C rate of 0.1C and 60°C with a constant current at a constant voltage (CCCV charging), and discharging was performed to 1.9 V at a C rate of 0.1C. The results of the charge/discharge test are shown in FIG. 9.

In addition, 10 cycles of a cycle test were performed on the secondary battery of Example 1 at 60°C under the following conditions.

Charging: Charging up to 4.4 V with a constant current at a constant voltage (CCCV discharging) and a C rate of 1C.

Discharging: Discharging to 1.9 V at a constant current (CC discharging) under a condition of a C rate of 1C.

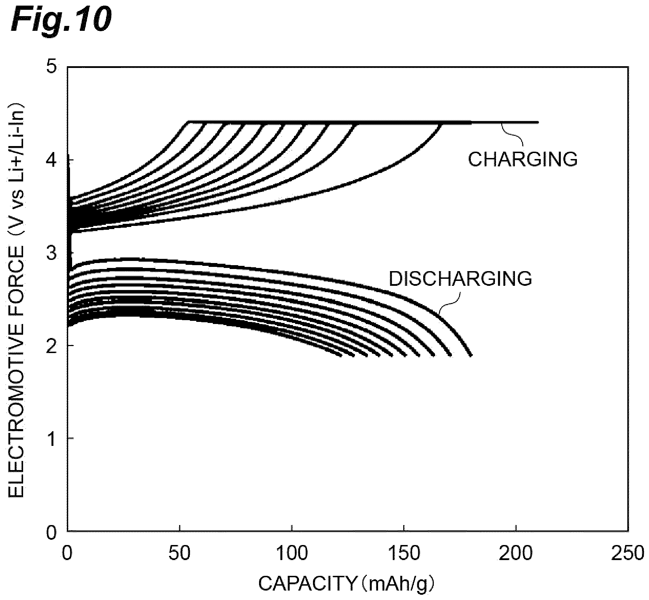

The relationship between the electromotive force (battery voltage) and the number of the cycles is shown in FIG. 10.

<Fabrication of cell for cyclic voltammetry>

As described below, a cell for cyclic voltammetry was fabricated. The cell for cyclic voltammetry was fabricated in a glove box substituted with an inert gas.

First, the lithium-containing chloride of Example 1 was put into an insulating tube having a diameter of 10 mm. A pressure of 200 MPa was applied to the lithium-containing chloride, and a first solid electrolyte layer (a layer of the lithium-containing chloride) was formed.

Next, 60 mg of a sulfide solid electrolyte ($Li_6PS_5Cl$) was disposed so as to come into contact with and cover the first solid electrolyte layer, thereby obtaining a laminate. A pressure of 200 MPa was applied to the laminate, and a second solid electrolyte layer was formed on the first solid electrolyte layer.

Next, 60 mg of an In foil was disposed so as to come into contact with and cover the second solid electrolyte layer, and 2 mg of a Li foil was disposed so as to come into contact with and cover the In foil, thereby obtaining a laminate. A pressure of 200 MPa was applied to the laminate, and a reference electrode made of a Li-In alloy was formed on the second solid electrolyte layer.

Furthermore, a disc-like plate that was made of stainless steel and was 10 mm in diameter and 0.1 mm in thickness was disposed so as to come into contact with and cover the first solid electrolyte layer, thereby obtaining a laminate. A pressure of 200 MPa was applied to the obtained laminate, and a working electrode made of stainless steel was formed on the first solid electrolyte layer.

Current collectors formed of stainless steel were attached to the reference electrode and the working electrode, and lead wires were then attached to the current collectors. All of the members were disposed in a desiccator sealed in the glove box. The cell for cyclic voltammetry of Example 1 was obtained as described above.

<Cyclic voltammetry test>

The reference electrode and the working electrode were electrically connected to an impedance analyzer SI1260 and a potentiostat SI1287A, and a cyclic voltammetry test was performed on the cell for cyclic voltammetry under the following conditions.

That is, in the cyclic voltammetry test, the sweep rate was set to 1 mV/s, and the value of a current that flowed when the potential of the working electrode was changed with respect to the reference electrode ($Li^+$/Li-In) was measured.

First, the potential of the working electrode with respect to the reference electrode was increased up to 5 V from an open-circuit voltage as a starting point, then, turned over and decreased to -1 V. After that, the potential was again increased up to 5 V, then, turned over and decreased to the same voltage as the initial open-circuit voltage.

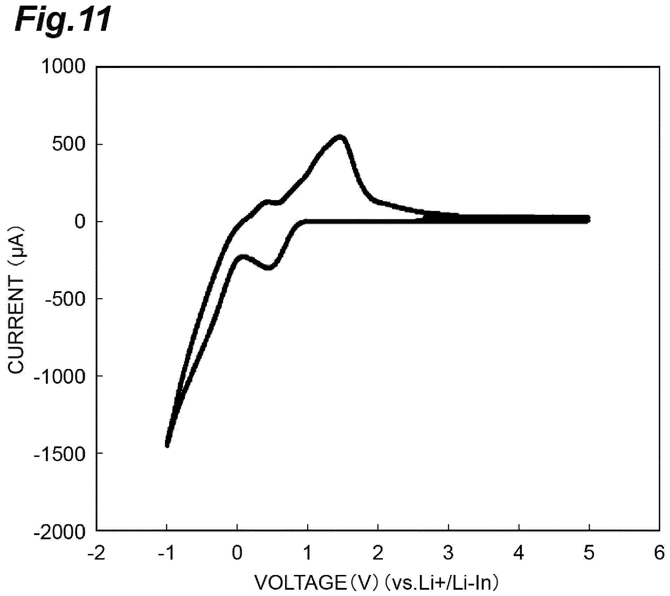

The cyclic voltammetry test was performed at room temperature (25°C). The results are shown in FIG. 11.

[Example 2]

A lithium-containing chloride was produced in the same manner as in Example 1 except that the prepared composition was changed to a composition shown in Table 2 using LiCl, $ZrCl_4$, $BiCl_3$ and LiBr, and a variety of physical properties were measured. The results are shown in Table 2.

In addition, the X-ray diffraction pattern of the lithium-containing chloride of Example 2 is shown in FIG. 1. As shown in FIG. 1, a reflection peak was observed in each of $2\theta$ angle ranges of 15° to 17°, 31° to 32.5°, 41° to 42.5°, 48.5° to 50° and 53° to 55°.

[Example 3]

A lithium-containing chloride was produced in the same manner as in Example 1 except that the prepared composition was changed to a composition shown in Table 2 using LiCl, $ZrCl_4$, $BiCl_3$, $ZnCl_2$ and LiBr, and a variety of physical properties were measured. The results are shown in Table 2.

In addition, the X-ray diffraction pattern of the lithium-containing chloride of Example 3 is shown in FIG. 1. As shown in FIG. 1, a reflection peak was observed in each of $2\theta$ angle ranges of 15° to 17°, 31° to 32.5°, 41° to 42.5°, 48.5° to 50° and 53° to 55°.

[Example 4]

A lithium-containing chloride was produced in the same manner as in Example 1 except that the prepared composition was changed to a composition shown in Table 2 using LiCl, $ZrCl_4$ and SnCl4, and a variety of physical properties were measured. The results are shown in Table 2.

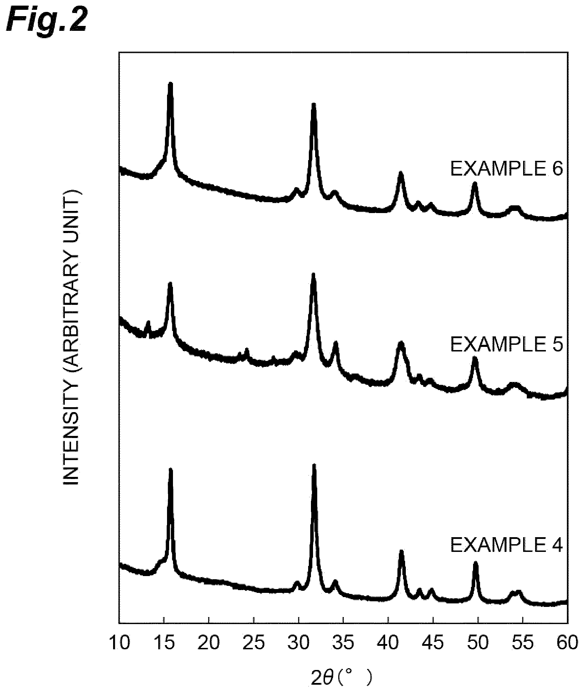

In addition, the X-ray diffraction pattern of the lithium-containing chloride of Example 4 is shown in FIG. 2. As shown in FIG. 2, a reflection peak was observed in each of 2θ angle ranges of 15° to 17°, 31° to 32.5°, 41° to 42.5°, 48.5° to 50° and 53° to 55°.

[Example 5]

A lithium-containing chloride was produced in the same manner as in Example 1 except that the prepared composition was changed to a composition shown in Table 2 using LiCl, $ZrCl_4$ and $LaCl_3$, and a variety of physical properties were measured. The results are shown in Table 2.
In addition, the X-ray diffraction pattern of the lithium-containing chloride of Example 5 is shown in FIG. 2. As shown in FIG. 2, a reflection peak was observed in each of 2θ angle ranges of 15° to 17°, 31° to 32.5°, 41° to 42.5°, 48.5° to 50° and 53° to 55°.

[Example 6]

A lithium-containing chloride was produced in the same manner as in Example 1 except that the prepared composition was changed to a composition shown in Table 2 using LiCl, $ZrCl_4$, $BiCl_3$ and LiI, and a variety of physical properties were measured. The results are shown in Table 2.
In addition, the X-ray diffraction pattern of the lithium-containing chloride of Example 6 is shown in FIG. 2. As shown in FIG. 2, a reflection peak was observed in each of 2θ angle ranges of 15° to 17°, 31° to 32.5°, 41° to 42.5°, 48.5° to 50° and 53° to 55°.

[Comparative Example 1]

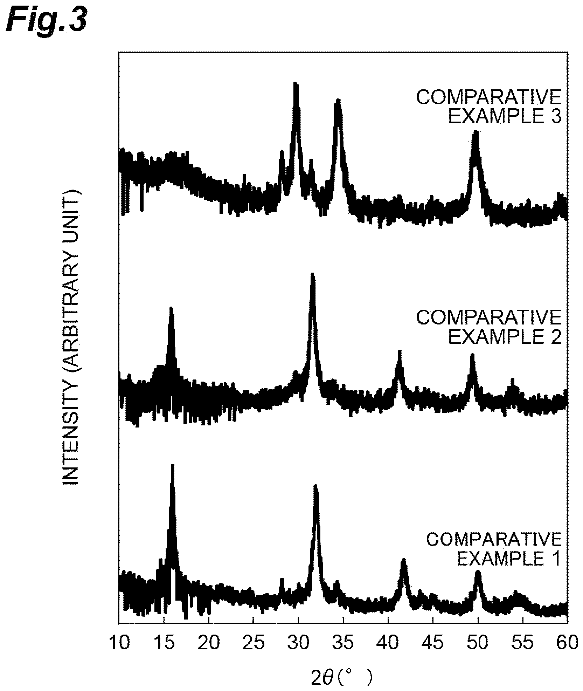

A lithium-containing chloride was produced in the same manner as in Example 1 except that the prepared composition was changed to a composition shown in Table 2 using LiCl and $ZrCl_4$, and a variety of physical properties were measured. The results are shown in Table 2.
In addition, the X-ray diffraction pattern of the lithium-containing chloride of Comparative Example 1 is shown in FIG. 3. As shown in FIG. 3, a reflection peak was observed in each of 2θ angle ranges of 15° to 17°, 31° to 32.5°, 41° to 42.5°, 48.5° to 50° and 53° to 55°.
In addition, a charge/discharge test was performed under the same conditions as in Example 1. The results are shown in FIG. 7.

[Comparative Example 2]

A lithium-containing chloride was produced in the same manner as in Example 1 except that the prepared composition was changed to a composition shown in Table 2 using LiCl, $ZrCl_4$ and LiBr, and a variety of physical properties were measured. The results are shown in Table 2. The lithium-containing chloride of Comparative Example 2 is the same composition as Example 21 in International Publication No. WO 2020/070955
In addition, the X-ray diffraction pattern of the lithium-containing chloride of Comparative Example 2 is shown in FIG. 3. As shown in FIG. 3, a reflection peak was observed in each of 2θ angle ranges of 15° to 17°, 31° to 32.5°, 41° to 42.5°, 48.5° to 50° and 53° to 55°.

[Comparative Example 3]

A lithium-containing chloride was produced in the same manner as in Example 1 except that the prepared composition was changed to a composition shown in Table 2 using LiCl, ZrCl4 and $ZrCl_2$, and a variety of physical properties were measured. The results are shown in Table 2.
In addition, the X-ray diffraction pattern of the lithium-containing chloride of Comparative Example 3 is shown in FIG. 3. As shown in FIG. 3, a reflection peak was observed in a 2θ angle range of 48.5° to 50°, but no reflection peaks were observed in the other three ranges.

[Table 2]

| | Prepared composition | P-3m1 peak | 15°-17° Peak half width (°) | 53°-55° Peak half width (°) | $\sigma_{25°C}$ (mS/cm) | $\sigma_{40°C}$ (mS/cm) | $\sigma_{60°C}$ (mS/cm) | $\sigma_{80°C}$ (mS/cm) | $\sigma_{100°C}$ (mS/cm) | $E_a$ (eV) 25°C-100°C |
|---|---|---|---|---|---|---|---|---|---|---|
| Example 1 | $Li_2ZrCl_{5.5}Br_{0.5}$ | Present | 0.82 | 1.62 | 0.613 | 1.13 | 2.69 | 5.40 | 9.48 | 0.383 |
| Example 2 | $Li_{2.1}Zr_{0.9}Bi_{0.1}Cl_{5.5}Br_{0.5}$ | Present | 0.37 | 1.61 | 0.347 | 0.667 | 1.63 | 3.33 | 6.06 | 0.398 |
| Example 3 | $Li_{2.05}Zr_{0.96}Bi_{0.03}Zn_{0.01}Cl_{5.7}Br_{0.3}$ | Present | 0.55 | 1.56 | 0.312 | 0.624 | 1.52 | 3.50 | 6.77 | 0.426 |
| Example 4 | $Li_2Zr_{0.9}Sn_{0.1}Cl_6$ | Present | 0.36 | 1.46 | 0.274 | 0.550 | 1.33 | 2.90 | 5.31 | 0.411 |
| Example 5 | $Li_{2.1}Zr_{0.9}La_{0.1}Cl_6$ | Present | 0.62 | 1.85 | 0.369 | 0.817 | 1.90 | 2.65 | 4.08 | 0.273 |
| Example 6 | $Li_{2.1}Zr_{0.9}Bi_{0.1}Cl_{5.97}I_{0.03}$ | Present | 0.61 | 1.73 | 0.436 | 0.850 | 1.95 | 4.28 | 7.01 | 0.390 |
| Comparative Example 1 | $Li_2ZrCl_6$ | Present | 0.33 | 1.47 | 0.327 | 0.575 | 1.29 | 2.57 | 3.95 | 0.356 |
| Comparative Example 2 | $Li_2ZrCl_5Br$ | Present | 0.19 | 1.12 | 0.211 | 0.416 | 1.02 | 2.14 | 4.00 | 0.408 |
| Comparative Example 3 | $Li_3Zr_{0.5}Zn_{0.5}Cl_6$ | Absent | - | - | 0.04 | 0.09 | 0.25 | 0.63 | 1.42 | 0.486 |

## Claims

1. A compound comprising:

   lithium;
   a tetravalent metal element M;
   chlorine; and
   a dopant element X,
   wherein the compound has a reflection peak in each of $2\theta$ angle ranges of 15° to 17°, 31° to 32.5°, 41° to 42.5°, 48.5° to 50° and 53° to 55° in an X-ray diffraction chart measured using a CuKa ray at 25°C, and a half width of a reflection peak having a largest peak height in the 15° to 17° range is 0.35° to 3.00°.

2. The compound according to Claim 1,
   wherein the compound has a sea-island structure including an island-like crystal phase and a sea-like amorphous phase that surrounds the crystal phase.

3. The compound according to Claim 2,
   wherein the crystal phase has an average circle-equivalent diameter of 10 to 100 nm.

4. A compound comprising:

   lithium;
   a tetravalent metal element M;
   chlorine; and
   a dopant element X,
   wherein the compound has a sea-island structure including an island-like crystal phase and a sea-like amorphous phase that surrounds the crystal phase.

5. The compound according to any one of Claims 1 to 4,
   wherein an activation energy is 0.43 eV or lower.

6. The compound according to any one of Claims 1 to 5,
   wherein the tetravalent metal element M is Zr.

7. The compound according to any one of Claims 1 to 6,
   wherein the dopant element X contains a halogen element X1 that is at least one of bromine and iodine.

8. The compound according to Claim 7,
   wherein a content of lithium is 15 to 30 mol%, a content of the tetravalent metal element M is 8 to 15 mol%, a content of chlorine is 50 to 70 mol%, and a content of the halogen element X1 is 0.2 to 8 mol%.

9. The compound according to any one of Claims 1 to 8,
   wherein the dopant element X contains at least one metal element X2 selected from the group consisting of divalent to tetravalent metal elements.

10. A compound that is represented by a composition formula: $Li_{\alpha}Zr_{\beta}Cl_{6-\gamma}X1_{\gamma}$,
    wherein $1.6 \leq \alpha \leq 2.5$, $0 < \beta \leq 1.1$, $0 < \gamma < 1$, and the element X1 is at least one of Br and I.

11. A compound that is represented by a composition formula: $Li_{\alpha}Zr_{\beta}X2_{\varepsilon}Cl_{6-\gamma}X1_{\gamma}$,
    wherein $1.6 \leq \alpha \leq 2.5$, $0 < \beta \leq 1.1$, $0 \leq \gamma < 1$ and $0 \leq \varepsilon < 1$ are satisfied, the element X1 is at least one of Br and I, the element X2 is at least one metal element selected from the group consisting of divalent to tetravalent metal elements, and at least one of $\gamma$ and $\varepsilon$ is larger than 0.

12. A solid electrolyte comprising:
    the compound according to any one of Claims 1 to 11.

13. A battery comprising:
    the compound according to any one of Claims 1 to 11.

14. A method for producing the compound according to any one of Claims 1 to 11, the method comprising:
a step of performing ball milling on a raw material to obtain the above-described compound.

# Fig.1

## Fig.2

**Fig.3**

Fig.4

## Fig.5

20nm

# Fig.6

# Fig.7

## Fig.8

## Fig.9

# Fig.10

*Fig.11*

## INTERNATIONAL SEARCH REPORT

| International application No. |
| --- |
| **PCT/JP2022/033461** |

### A. CLASSIFICATION OF SUBJECT MATTER

*C01G 25/04*(2006.01)i; *C01G 29/00*(2006.01)i; *H01B 1/06*(2006.01)i; *H01M 10/052*(2010.01)i; *H01M 10/0562*(2010.01)i
FI: C01G25/04; C01G29/00; H01B1/06 A; H01M10/052; H01M10/0562

According to International Patent Classification (IPC) or to both national classification and IPC

### B. FIELDS SEARCHED

Minimum documentation searched (classification system followed by classification symbols)

C01G25/04; C01G29/00; H01B1/06; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2020/070956 A1 (PANASONIC INTELLECTUAL PROPERTY MANAGEMENT CO., LTD.) 09 April 2020 (2020-04-09) <br> paragraphs [0009], [0010], [0092], examples 1-9, 17-28, 32-35, 39-45, 49, 53, 59 | 1-14 |
| X | WO 2020/070955 A1 (PANASONIC INTELLECTUAL PROPERTY MANAGEMENT CO., LTD.) 09 April 2020 (2020-04-09) <br> paragraphs [0009]-[0018], [0089], [0116], example 35 | 1-14 |
| X | WO 2021/024783 A1 (TDK CORP.) 11 February 2021 (2021-02-11) <br> paragraphs [0022], [0031], [0038], [0039], [0086], examples 15-35, 37-54, 75, 76 | 1-14 |
| X | WO 2020/070957 A1 (PANASONIC INTELLECTUAL PROPERTY MANAGEMENT CO., LTD.) 09 April 2020 (2020-04-09) <br> paragraphs [0009]-[0021], [0090], examples 1-8, 16, 17, 19-24 | 10-14 |
| X | WO 2019/135321 A1 (PANASONIC INTELLECTUAL PROPERTY MANAGEMENT CO., LTD.) 11 July 2019 (2019-07-11) <br> paragraphs [0012]-[0024], [0079], examples 3-5, 9, 10, 14, 15, 19, 20 | 10-14 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **01 November 2022** | **22 November 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/033461**

| Patent document cited in search report | | | Publication date (day/month/year) | Patent family member(s) | | | Publication date (day/month/year) |
|---|---|---|---|---|---|---|---|
| WO | 2020/070956 | A1 | 09 April 2020 | US | 2021/0098825 | A1 | |
| | | | | paragraphs [0013]-[0020], [0129], examples 1-9, 17-28, 32-35, 39-45, 49, 53, 59 | | | |
| | | | | EP | 3863025 | A1 | |
| | | | | CN | 112136184 | A | |
| WO | 2020/070955 | A1 | 09 April 2020 | US | 2021/0098823 | A1 | |
| | | | | paragraphs [0012]-[0028], [0117], [0152], example 35 | | | |
| | | | | EP | 3863028 | A1 | |
| | | | | CN | 112204675 | A | |
| WO | 2021/024783 | A1 | 11 February 2021 | US | 2022/0255125 | A1 | |
| | | | | paragraphs [0049], [0050], [0062], [0072]-[0075], [0151], examples 15-35, 37-54, 75, 76 | | | |
| | | | | CN | 114207896 | A | |
| WO | 2020/070957 | A1 | 09 April 2020 | US | 2021/0126284 | A1 | |
| | | | | paragraphs [0013]-[0030], [0116], examples 1-8, 16, 17, 19-24 | | | |
| | | | | EP | 3863027 | A1 | |
| | | | | CN | 112136185 | A | |
| WO | 2019/135321 | A1 | 11 July 2019 | US | 2020/0328463 | A1 | |
| | | | | paragraphs [0025]-[0040], [0097], examples 3-5, 9, 10, 14, 15, 19, 20 | | | |
| | | | | EP | 3736831 | A1 | |
| | | | | CN | 111295719 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020070955 A
- WO 2020070956 A
- WO 2020070957 A
- WO 2020070958 A
- WO 2020188913 A
- WO 2020188914 A
- WO 2020188915 A
- WO 2021024876 A

**Non-patent literature cited in the description**

- **H. KWAK.** New Cost-Effective Halide Solid Electrolytes for All-Solid-State Batteries: Mechanochemically Prepared Fe3+-Substituted Li2ZrCl. *Wiley, Advanced Energy Material,* 2021, vol. 11 (12), 18-2003190
- On the Mechanism of the Production of Zirconium and Hafnium Metals by Fused Salt Electrolysis. **G. J. KIPOUROS et al.** ECS Proceedings Volumes, Proc. IOP Publishing, 1990, vol. 1990-17, 626
- Properties of the solutions of the alkali-chlorozirconate compounds in alkali-chloride melts. **S. N. FLENGAS et al.** Canadian Journal of Chemistry. Canadian Science Publishing, 1968, vol. 46, 495-502